Europäisches Patentamt

European Patent Office

Office européen des brevets

(19)

(11) **EP 1 128 170 A1**

(12) **EUROPEAN PATENT APPLICATION**

(43) Date of publication:
  **29.08.2001 Bulletin 2001/35**

(51) Int Cl.$^7$: **G01J 1/44**

(21) Application number: **00850035.7**

(22) Date of filing: **25.02.2000**

(84) Designated Contracting States:
  **AT BE CH CY DE DK ES FI FR GB GR IE IT LI LU MC NL PT SE**
  Designated Extension States:
  **AL LT LV MK RO SI**

(71) Applicant: **Telefonaktiebolaget L M Ericsson (Publ)**
  **126 25 Stockholm (SE)**

(72) Inventor: **Forsberg, Gunnar**
  **117 65 Stockholm (SE)**

(74) Representative: **Jansson, Margareta Karin**
  **Ericsson Telecom AB**
  **Patent Unit Service and Backbone Networks**
  **126 25 Stockholm (SE)**

Remarks:
  A request for addition of drawings has been filed pursuant to Rule 88 EPC. A decision on the request will be taken during the proceedings before the Examining Division (Guidelines for Examination in the EPO, A-V, 3.).

(54) **Photodiode bias circuit**

(57)  The present invention relates to a method for biasing a photodiode (1) with a bias voltage ($U_B$) and to a photodiode bias circuit performing said method. The photodiode (1) is producing a photocurrent ($I_P$). According to the invention the following steps are performed: Reading a measurand (Ul) related to the photocurrent ($I_P$). Comparing the measurand (U1) with a threshold ($U_{th}$). Giving the bias voltage ($U_B$) a magnitude depending on whether the measurand (Ul) is larger than the threshold ($U_{th}$) or smaller.

Fig. 1

EP 1 128 170 A1

**Description**

**TECHNICAL FIELD OF THE INVENTION**

The present invention relates to a method for biasing a photodiode with a bias voltage and to a photodiode bias circuit performing said method.

**DESCRIPTION OF RELATED ART**

When optical power is to be read and transformed into a current or a voltage, it is common to use a photodiode, e.g. of PN-type with the two layers positive and negative, or of PIN-type with the three layers positive, intrinsic and negative. The positive end of the diode is called an anode and the negative end is called a cathode. A phototransistor may be used in a way equivalent to the photodiode and when photodiodes are discussed below, phototransistors are considered to be included in the discussion.

When a photodiode is used it is optimised either for high or low optical powers by using a constant bias voltage. As an example, if a photodiode of e.g. PIN-type is used and a low optical power, such as <1 $\mu$W, is to be measured, then the photodiode should have a bias voltage of 0 V. This is due to the fact that photodiodes when biased normally has a so called dark current which may disturb. The photodiode may also be seen as having a shunt resistance that conducts when the bias voltage is not 0 V, but close to 0 V, and thus provides a current. The magnitude of said currents may be e.g. 25 nA at 70°C.

If on the other hand said photodiode is to measure a high optical power, such as >0,5 mW, the photodiode needs to be biased with e.g. 5 V or else the photodiode will become saturated and the photo current will thus become too small.

A disadvantage with known circuits for photodiodes is thus that the range of the optical power cannot be too wide. An example of an application where the optical power range is wide is in systems using wavelength division multiplexing (WDM). This means that signals are transmitted in a line divided into channels with different wavelengths. The signals are amplified on the way and sometimes it is wished to be able to measure the total optical power before or after amplification. The development is going towards more channels in the same line, which of course leads to a higher maximum optical power and thus an urgent need exists for something that may measure a wide optical power range.

Most often the signal from the photodiode needs to be amplified, linearly or logarithmically depending on the application. It is previously known to use the logarithmic characteristics of a diode or a transistor to accomplish a logarithmic amplifier. However, said logarithmic characteristics are highly dependent on temperature and thus logarithmic amplifier circuits have been developed to compensate for the temperature dependency. A good overview of different circuits may be found in "What's All This Logarithmic Stuff, Anyhow?", Electronic design, June 14, 1999, p 111-115.

**SUMMARY**

The problem with known photodiode bias circuits is that they cannot be used when the range of the optical power is very wide.

This is solved in the present invention in providing a photodiode circuit performing the following steps:

- reading a measurand related to the photocurrent of the photodiode,

- comparing the measurand with a threshold and

- giving the bias voltage of the photodiode a magnitude depending on whether the measurand is larger than then threshold or smaller.

The advantage with this invention is that a photodiode bias circuit is achieved, wherein the generated photocurrent is linear in a wide range of optical power. Further, this is achieved with a simple circuit that also may be used for other purposes, which saves money, space and time.

The invention will now be described in detail with reference to accompanying drawings. More advantages will follow from the different embodiments described.

**BRIEF DESCRIPTION OF THE DRAWINGS**

Figure 1 discloses a schematic overview of a photodiode bias circuit according to the present invention.

Figure 2 discloses an embodiment of the first differential amplifier shown in Fig. 1.

Figure 3 discloses an embodiment of the comparator shown in Fig. 1.

Figure 4 discloses another embodiment of the comparator shown in Fig. 1.

Figure 5 discloses an embodiment of the present invention including a charge compensation capacitor.

Figure 6 discloses an embodiment of Fig. 5.

Figure 7 discloses a photo amplifier in which the photodiode bias circuit according to the present invention may be used.

Figure 8 discloses a schematic view of an embodiment of Fig. 7.

Figure 9 discloses a schematic view of another embodiment of Fig. 7.

Figure 10 discloses an embodiment of a practical implementation of Fig. 9.

Figure 11 discloses an embodiment of the inverting amplifier shown in Fig. 10.

**DETAILED DESCRIPTION OF EMBODIMENTS**

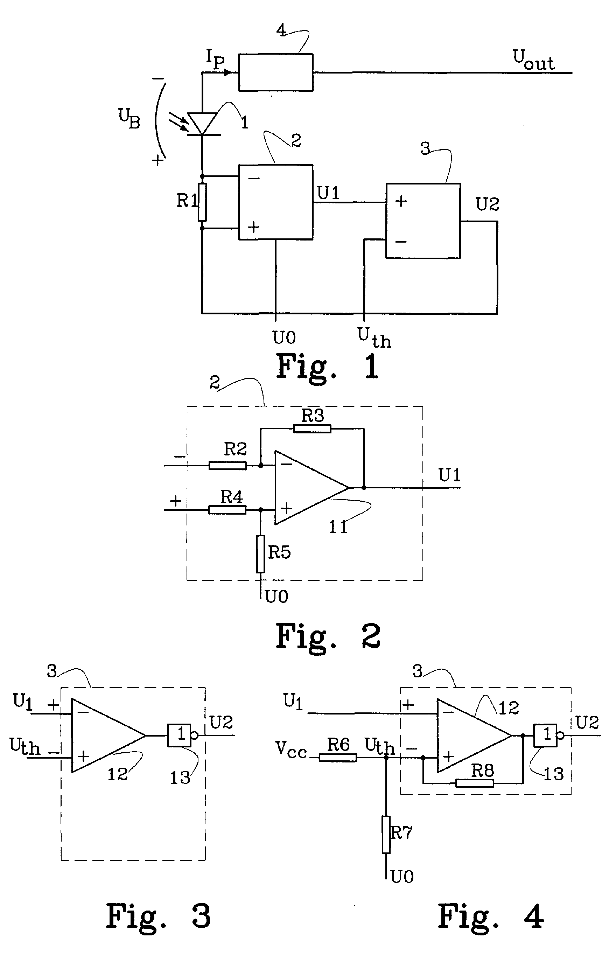

In Fig 1 is shown a photodiode bias circuit according to the invention. A photodiode 1 gives out a photocurrent $I_P$. The main idea is that said photocurrent $I_P$ is to be measured and compared to a threshold and that the photodiode 1 is given a bias voltage $U_B$ depending on if the photocurrent $I_P$ is above or below said threshold. It is possible to measure the photocurrent $I_P$ directly and to compare it to a threshold current. However, voltages are easier to measure and compare, so in the example in Fig. 1 the photocurrent $I_p$ is transformed to a voltage. This is done by connecting the photodiode 1 in series with a first resistor R1. The first resistor R1 may be connected either to the cathode or to the anode of the photodiode 1. However, since the anode is more sensitive it is preferred to connect the first resistor R1 to the cathode, as is shown in the figures.

A first differential amplifier 2 or similar is connected with its negative input to one end of the first resistor R1 and with its positive input connected to the other end of the first resistor R1. Thus, the differential amplifier 2 reads a voltage $I_p \cdot R1$ over the first resistor R1.

The first differential amplifier 2 gives out a first voltage U1, which in its turn is compared with a threshold voltage $U_{th}$ in a comparator 3, which then gives out a second voltage U2, which will affect the bias voltage $U_B$. The anode of the photodiode 1 is in this example connected to a voltage at ground level, so called virtual ground.

The first voltage U1 is connected to the positive input of the comparator 3 and the threshold voltage $U_{th}$ is connected to the negative input of the comparator 3. Thus, if the first voltage U1 is greater than the threshold voltage $U_{th}$, then the second voltage U2 from the comparator 3 becomes high, e.g. 5 V. Thus, the bias voltage $U_B$ in this case becomes a little less than 5 V. If, on the other hand, the first voltage $U_1$ is smaller than the threshold voltage $U_{th}$, then the second voltage U2 from the comparator 3 becomes 0 V. Thus, the bias voltage $U_B$ in this case becomes extremely close to 0 V. The magnitude of the high bias voltage is chosen to suit the particular photodiode 1 that is used, depending on its inner serial resistance. However, to simplify the description, the example 5 V will be used in the following.

If the voltage of the anode of the photodiode 1 should have another magnitude than virtual ground, then the values of the second voltage U2 given above should be changed accordingly to give the desired bias voltage $U_B$.

An advantage with the invention in Fig. 1 is that it is a photodiode bias circuit that works well when the photodiode is to measure low optical powers. This is because the bias voltage $U_B$ in this case is 0 V, which minimises both dark current and the effects of the shunt resistance and thus improves linearity. Further, the invention in Fig. 1 is also a photodiode bias circuit that works well when the photodiode is to measure high optical powers. This is because the photodiode in this case gets a bias voltage $U_B$ of e.g. 5 V, which prevents the photodiode from becoming saturated too quickly and thus improves linearity. Thus, a photodiode bias circuit is achieved that works linearly in a wide optical power range. The photodiode current may then be amplified in a photo amplifier 4 to for example an output voltage $U_{out}$ for whatever uses it is further intended. In the examples below a logarithmic amplifier is used as an example. However, this photodiode circuit could also be used with linear or other amplifiers.

In Fig. 2 is shown an example on how the first differential amplifier 2 may look. The main part includes a first operational amplifier 11 with a positive input, a negative input and an output, which gives out the first voltage U1. A second resistor R2 is connected between the negative input of the first differential amplifier 2 and the negative input of the first operational amplifier 11. A third resistor R3 is connected between the negative input of the first operational amplifier 11 and the output of the first operational amplifier 11. A fourth resistor R4 is connected between the positive input of the first differential amplifier 2 and the positive input of the first operational amplifier 11. A fifth resistor R5 is connected between the positive input of the first operational amplifier 11 and a level adjust voltage U0.

The level adjust voltage U0 may be ground, but it may also be used to displace the whole voltage interval used. This applies to all places where the level adjust voltage U0 is used. It is normal to choose the resistances so that the second resistor R2 and the fourth resistor R4 are equal, and so that the third resistor R3 and the fifth resistor R5 are equal. If the resistance of the first resistance R1 is much smaller than the other resistances, then the first voltage U1 may be written as:

$$U1 = (R1 \cdot I_P) \cdot R3/R2 + U0 \tag{1}$$

This is a simplified reasoning. In practise, when the first differential amplifier 2 is to be used in the circuit in Fig. 1, then the fourth resistor R4 may be complemented with some other resistors to compensate for the resistive influence from the first resistor R1.

In Fig. 3 is shown an embodiment of the comparator 3. It is difficult to find a commercial comparator that has a swing between 0 V and 5 V. When low optical powers are to be measured, the closer the bias voltage $U_B$, i.e. in this case also the second voltage U2, is to 0 V, the better, i.e. the more linear, this photodiode circuit will work. The second voltage U2 should in that case preferably not be higher than a few mV. Commercial comparators often have difficulties in getting that close to 0 V.

This can be solved with the embodiment in Fig. 3, where the comparator 3 includes an inverter 13 and an inner comparator 12 with a positive and a negative input and an output. The positive input of the inner comparator 12 is used as the negative input of the comparator 3 and vice versa, due to the following inverter 13. If the inverter 13 is e.g. of CMOS-type it will have the same logical output as its supply voltage. Thus if the inverter 13 is supplied with 0 V and 5 V, its output will change between 0 V and 5 V, which is exactly what is wanted. Note that the main issue is not that it is an inverter, but that it has the output that is wanted. The same result could be achieved with e.g. another CMOS-circuit or with a comparator with CMOS-type output.

A photodiode is normally sensitive to fast changes in its bias voltage, why it is a big advantage if the positive supply voltage to the inverter 13 is carefully filtered so that there are no disturbances on the output of the inverter 13.

If the first voltage U1 happens to be close to the threshold voltage $U_{th}$, frequent changes could occur in the second voltage U2 and thus in the bias voltage $U_B$. That is not desired. An improved solution would then be to introduce a hysteresis with two thresholds. This may e.g. be accomplished by using a comparator with a feedback also called a Schmitt trigger. This is represented in Fig. 4. A sixth resistor R6 is connected between the power supply voltage $V_{cc}$ and the positive input of the inner comparator 12. A seventh resistor R7 is connected between the level adjust voltage U0 and the positive input of the inner comparator 12. A eighth resistor R8 is connected between the positive input and the output of the inner comparator 12.

The threshold voltage $U_{th}$ is created on the positive input of the inner comparator 12 with a level adjustment from the level adjust voltage U0. If the circuit should be arranged so that the threshold voltage $U_{th}$ feeds the negative input of the inner comparator 12, then the positive input of the inner comparator 12 should be fed from a low-resistance source in order that the positive feedback is precisely determined, i.e. the resistances should be selected so that R7<<R8.

When then the connection is as in Fig. 4 and the output of the inner comparator 12 changes state, then the positive feedback has the effect of changing the threshold voltage $U_{th}$ slightly so that a relatively large change of input signal is then required to reverse the output state.

It is possible to change the bias voltage both fast and slow. A photodiode have a certain capacitance between its anode and cathode. This leads to that when the voltage is changed over the photodiode, then a transient current is generated proportionally to the derivative of the voltage change. Thus, one would believe that it would be better to change the bias voltage slowly. However, if the bias voltage is changed slowly, then the total circuit will become slow and rapid changes in optical power will not be measured. Thus, the preferred embodiment is to change the bias voltage fast.

When the bias voltage is raised, then said transient current will have a rather small influence compared to the large photo current. Instead there will be a problem when the optical power and thus the bias voltage is lowered. That is because the charge between the cathode and the anode of the photodiode will totally cut-off the photo amplifier. Thus, the photo amplifier will consider that it is measuring total darkness and will do that until the photocurrent has restored the real charge.

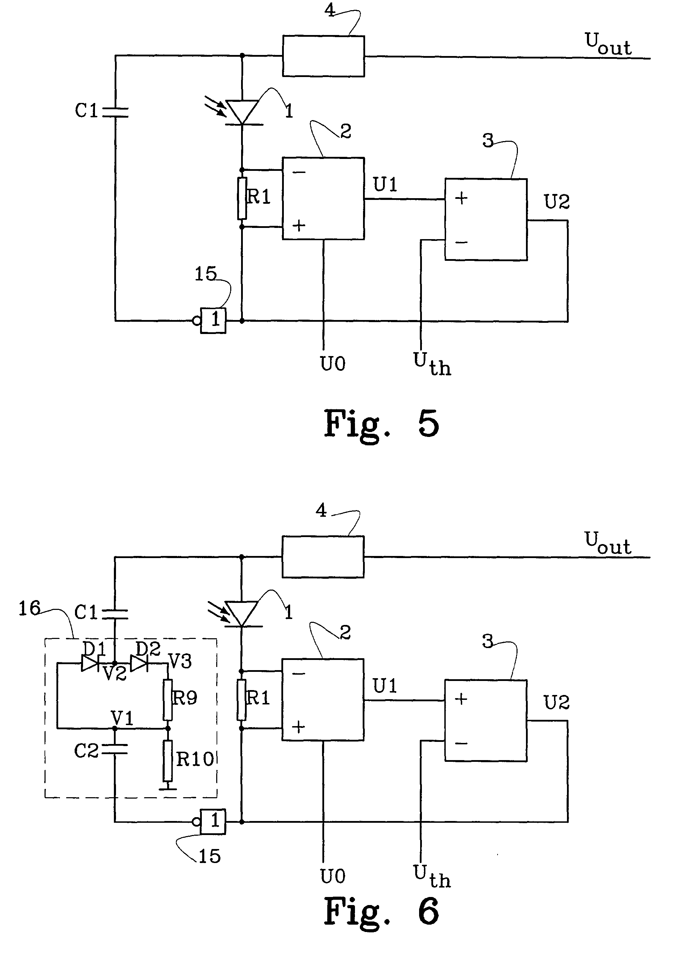

A solution to this problem is shown in Fig. 5. A charge compensation capacitor C1 is introduced between the anode of the photodiode 1 and the output of the comparator 3 over a second inverter 15. The purpose is to generate a second transient current with the opposite sign as the first transient current produced by the photodiode 1 when the bias voltage is changed.

Preferably, the capacitance of the charge compensation capacitor C1 is somewhat larger than the capacitance of the photodiode 1. What will happen is then this: When the bias voltage $U_B$ suddenly goes down to 0 V, then a first transient current will come out from the input of the photo amplifier 4 through the photodiode. A few ns later a somewhat larger second transient current will be produced by the charge compensation capacitor C1 in the opposite direction. If the photo amplifier 4 is normally slow it will only feel a small fast sum transient current in the right direction, i.e. into its input. This means that the output voltage $U_{out}$ will experience a fast positive transient and then regain its correct value without ever going below said correct value. Thus, the photo amplifier 4 and subsequent circuits will never believe that it is dark simply because the bias voltage $U_B$ suddenly is lowered.

In the simplest version there is simply a direct connection between the charge compensation capacitor C1 and the second inverter 15. This means that the charge compensation capacitor C1 always is connected with a low impedance to the second inverter 15. In certain applications this is a disadvantage. As an example, the bandwidth of the total circuit with photodiode and photo amplifier may become deteriorated due to the extra input capacitance from the charge compensation capacitor C1.

This may be solved by using an isolator 16 to isolate the charge compensation capacitor C1 from the second inverter 15 e.g. with the aid of diodes. The isolator may be implemented in numerous ways and one alternative is shown in Fig. 6. The man skilled in the art can easily adopt other versions with equivalent function.

A second capacitor C2 is on one end connected to the output of the second inverter 15 and on its other end, at the first potential V1, to the anode of a first diode, to a ninth resistor R9 and to a tenth resistor R10. The tenth resistor R10 is further connected to ground. The cathode of the first diode D1 is connected, at the second potential V2, to the charge compensation capacitor C1 and to the anode of a second diode D2. The cathode of the second diode D2 is further connected, at the third potential V3, to the ninth resistor R9.

In a status quo case the three potentials V1, V2, V3 will be 0 V since no currents are flowing. Further, the impedance over the isolator 16 will be high - with a low capacitance.

If the photocurrent $I_p$ decreases and the second voltage U2 goes down to 0 V, then the second inverter 15 will go high and the second capacitor C2 will be charged. Thus, the first potential V1 will become high and the first diode D1 starts to conduct, which means that the second potential V2 will become high. This in its turn will charge the charge compensation capacitor C1, which will discharge through the input of the photo amplifier 4, as mentioned earlier.

The second capacitor C2 should be chosen with a higher capacitance than the charge compensation capacitor C1, because in that case the second capacitor C2 will discharge slower than the charge compensation capacitor C1. The second capacitor C2 discharges over the tenth resistor R10 to ground. When it is completely discharged, the first potential V1 will once again become 0 V and the first diode D1 will stop conducting. The second potential V2 will discharge again over the second diode D2 and the ninth resistor R9. Thus, the status quo is once again reached.

If instead the photo current $I_P$ increases and thus the second voltage U2 increases and thus the second inverter goes low, then the second capacitor C2 will be charged and the first potential V1 will decrease to -5 V. The second capacitor C2 will then charge and discharge much like in the previous example, but with the current in the opposite direction, and the first potential V1 will return to 0 V.

A preferred embodiment is that the transient current from the charge compensation capacitor C1 should not be very high when the photo current $I_p$ is high, as explained above. In that case the resistances of the ninth resistor R9 and the tenth resistor R10 should be rather high. That is because that leads to that only a small current flows from the second potential V2 to the first potential V1 over the second diode D2 and the ninth resistor R9. Thus, the charge compensation capacitor C1 is charged slower and a smaller transient current will occur.

In prior art it is common to filter away disturbances with strong low-pass-filtering, which gives the effect that the bandwidth is narrowed and thus that fast changes in the optical power cannot be measured. An advantage with the last embodiments of the present invention is that the automatic change of the bias voltage is so smooth that it is possible to have a high bandwidth without getting problems with disturbances.

The different embodiments of the photodiode bias circuit described above are all applicable in the following figures. They are however left out in those figures due to lack of space.

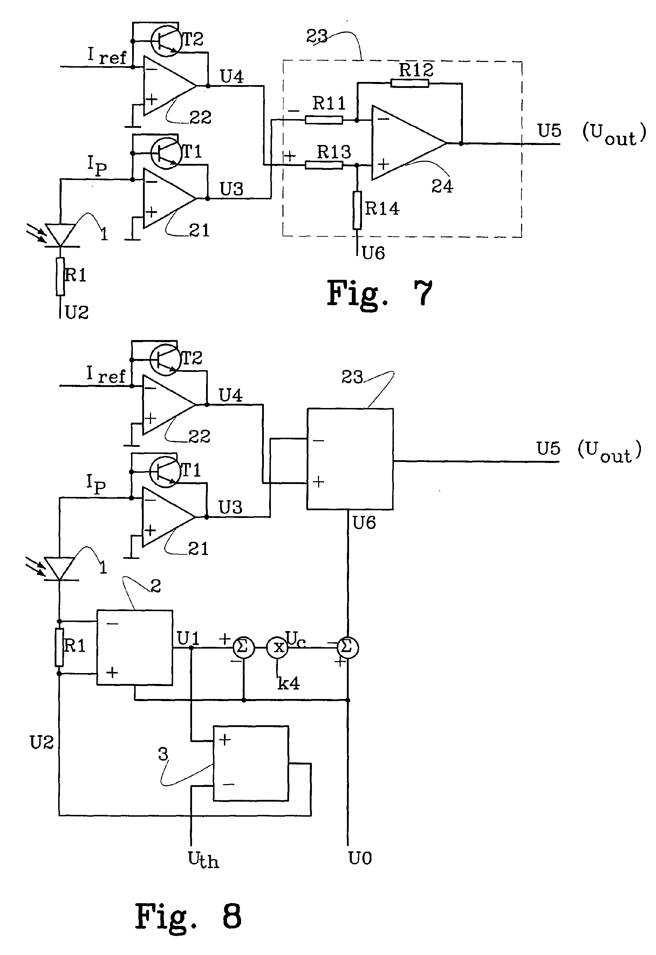

The photo amplifier 4 used to amplify the photocurrent may look in different ways. One logarithmic version is shown in Fig. 7. The photo current $I_p$ is fed into the negative input of a second operational amplifier 21. The positive input of the second operational amplifier 21 is connected to ground and there is a first transistor T1 connected between the negative input and the output of the second operational amplifier 21.

In Fig. 7 the first transistor T1 is connected with its collector and base to the negative input of the second operational amplifier 21 and with its emitter to the output of the second operational amplifier 21, but other connections are possible. Especially it is possible to instead connect the base to ground. It is also possible to use a diode instead of the first transistor T1. This connection of a transistor or a diode makes the output voltage of the second operational amplifier 21 a logarithmic function of any current, such as the photocurrent $I_P$. It is of course possible to use an input voltage instead, together with an input resistor. Said output voltage will from now on be called the third voltage U3 for short.

Since an operational amplifier has a very large input impedance the current flowing through the first transistor T1 is approximately equal to the photo current $I_p$. If the first transistor T1 has a first inherent temperature dependent constant k1, then the third voltage U3 will become:

$$U3 = -k1 \cdot \ln(I_P/I_{01}) \qquad\qquad (2)$$

where $I_{01}$ is the reverse leakage current for the first transistor T1. The formula applies only approximately and only for currents that are not very small or large.

As an example, when the first transistor T1 is connected as in Fig. 3, a behaviour in an ordinary transistor with a first constant k1 of 0.06 V and a reverse leakage current $I_{01}$ of $10^{-13}$ A could be that if the temperature is stable, then the voltage over the first transistor T1 increases about 60 mV when the current flowing through it increases 10 times, which in this case corresponds to an increase in optical power of 10 dB.

This alone makes up a logarithmic amplifier, however very temperature dependent. Firstly, the output voltage from the second operational amplifier 21 varies typically -2mV/°C. Secondly, the voltage increase over the first transistor T1 due to current increase varies proportional to the absolute temperature in Kelvin.

To decrease the first temperature dependency the difference is taken between the third voltage U3 and a fourth voltage U4 that is used as a reference. If the fourth voltage U4 have approximately the same temperature dependency as the third voltage U3, then they will be affected approximately equal from temperature changes and the difference between them will thus take away most of said temperature dependency.

The fourth voltage U4 may be accomplished by using a reference current $I_{ref}$, which enters the negative input of a third operational amplifier 22 that has a second transistor or diode T2 connected in the same way as the second operational amplifier 21 has. The fourth voltage U4 is taken from the output of the third operational amplifier 22 and is thus a logarithmic function of the reference current $I_{ref}$. If the second transistor T2 has a second inherent temperature dependent constant k2, then the fourth voltage U4 becomes:

$$U4 = -k2 \cdot \ln(I_{ref}/I_{02}) \qquad\qquad (3)$$

where $I_{02}$ is the reverse leakage current for the second transistor T2. The second constant k2 will have a value that is very close to the first constant k1. The same comments as for formula (2) apply.

It is appropriate to chose the reference current $I_{ref}$ in the middle of the interval where measuring is intended. This is because the measuring error due to temperature dependence will be smaller the closer the photocurrent $I_p$ is to the reference current $I_{ref}$. Thus, if it is a wish to measure photocurrents from 0,1 µA to 1 mA it is appropriate that the reference current $I_{ref}$ is approximately 10 µA.

Further, the easiest way of implementing this circuit is to chose transistors T1 and T2 that have similar temperature characteristics and place them close together, so as to keep them in the same temperature. It is preferable to place them in the same integrated circuit.

The third voltage U3 and the fourth voltage U4 enters a second differential amplifier 23, which gives out a fifth voltage U5. Optionally, a sixth voltage U6 may be entered into the differential amplifier if there is a wish to level adjust the interval within which the fifth voltage U5 may be. The sixth voltage U6 may be the same as the level adjust voltage U0 or something else. The fifth voltage U5 may then be used as the output voltage $U_{out}$ directly or via other circuits. If the second differential amplifier has a third inherent constant k3, then the fifth voltage U5 will become:

$$U5 = (U4-U3) \cdot k3 + U6 \qquad\qquad (4)$$

$$U5 = [k1 \cdot \ln(I_P/I_{01}) - k2 \cdot \ln(I_{ref}/I_{02})] \cdot k3 + U6 \qquad\qquad (5)$$

In Fig. 7 is also shown an example on how the second differential amplifier 23 may look. The main part includes a fourth operational amplifier 24 with a positive input, a negative input and an output, which gives out the fifth voltage U5. An eleventh resistor R11 is connected between the negative input of the second differential amplifier 23 and the negative input of the fourth operational amplifier 24. A twelfth resistor R12 is connected between the negative input of the fourth operational amplifier 24 and the output of the fourth operational amplifier 24. A thirteenth resistor R13 is connected between the positive input of the second differential amplifier 23 and the positive input of the fourth operational amplifier 24. A fourteenth resistor R14 is connected between the positive input of the fourth operational amplifier 24 and the sixth voltage U6.

It is normal to choose the resistances so that the eleventh resistor R11 and the thirteenth resistor R13 are equal, and so that the twelfth resistor R12 and the fourteenth resistor R14 are equal. In this case the fifth voltage U5 may be written as:

$$U5 = (U4-U3) \cdot R12/R11 + U6 \tag{6}$$

Thus making:

$$k3 = R12/R11 \tag{7}$$

A problem with transistors and diodes is that they normally have an inner serial resistance, e.g. $0,5\,\Omega$, between collector and emitter or between anode and cathode, respectively. This may cause a notable error for currents larger than approximately 0,1 mA due to unwanted voltage-drop over the inner resistance. This may be compensated by subtracting a compensation voltage $U_c$ from the output voltage $U_{out}$.

Said compensation voltage $U_c$ should be proportional to the photocurrent $I_p$ and when there is no photocurrent $I_p$, then the compensation voltage $U_c$ should be equal to zero. This can be accomplished in practise in many ways. An example is shown schematically in Fig. 8. Since the fifth voltage U5 is level adjusted by the sixth voltage U6, see (4), said sixth voltage U6 may be used to correct the fifth voltage U5 and thus the output voltage $U_{out}$ by taking:

$$U6 = U0 - U_C \tag{8}$$

Thus, the fifth voltage U5 becomes:

$$U5 = (U4-U3) \cdot k3 + U0 - U_C \tag{9}$$

The first voltage U1 is proportional to the photocurrent $I_P$, however with a level adjustment U0, see (1), and the compensation voltage can thus be accomplished by:

$$U_C = (U1 - U0) \cdot k4 = (R1 \cdot R3/R2) \cdot k4 \cdot I_P \tag{10}$$

where k4 is a fourth constant.

An advantage with this embodiment is that the same circuit - the first differential amplifier 2 - may be used for two purposes, i.e. to create the bias voltage $U_B$ for the photodiode and to create the compensation voltage $U_c$. This saves components and space and further reduces the time for manufacturing. However, it would be equally possible to have separate circuits for the two purposes.

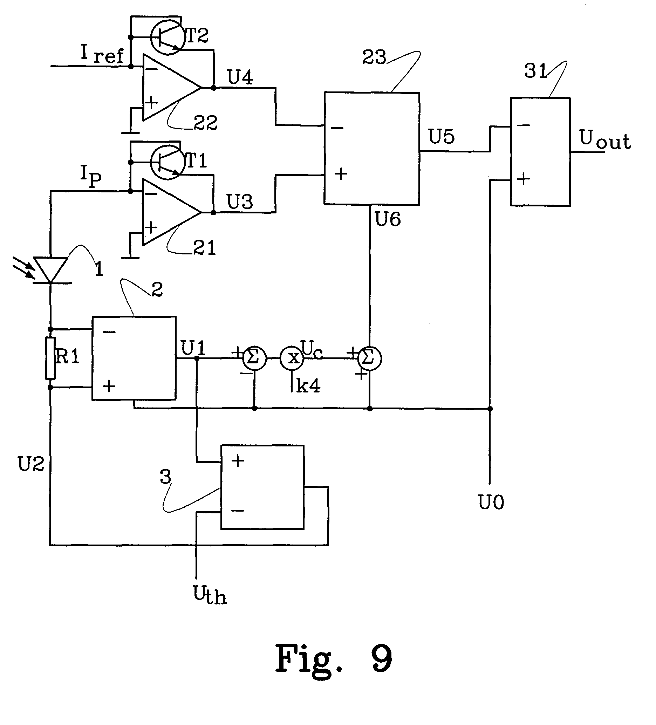

A further alternative solution is to put an inverting amplifier 31 on the output of the second differential amplifier 23, see Fig. 9, thus making the output voltage $U_{out}$ the inverse of the fifth voltage U5 according to:

$$U_{out} = (U0-U5) \cdot k5 + U0 \tag{11}$$

where k5 is a fifth constant inherent in the inverting amplifier 31. This means that the compensation voltage $U_C$ may instead be added to the level adjust voltage U0. To make the output voltage $U_{out}$ correct the inputs to the second differential amplifier 23 should switch place and the result will then become:

$$U6 = U0 + U_C \tag{12}$$

$$U5 = (U3-U4) \cdot k3 + U6 \tag{13}$$

$$U_{out} = (U0-U5) \cdot k5 + U0 = (U4-U3) \cdot k3 \cdot k5 + U0 - U_C \cdot k5 \tag{14}$$

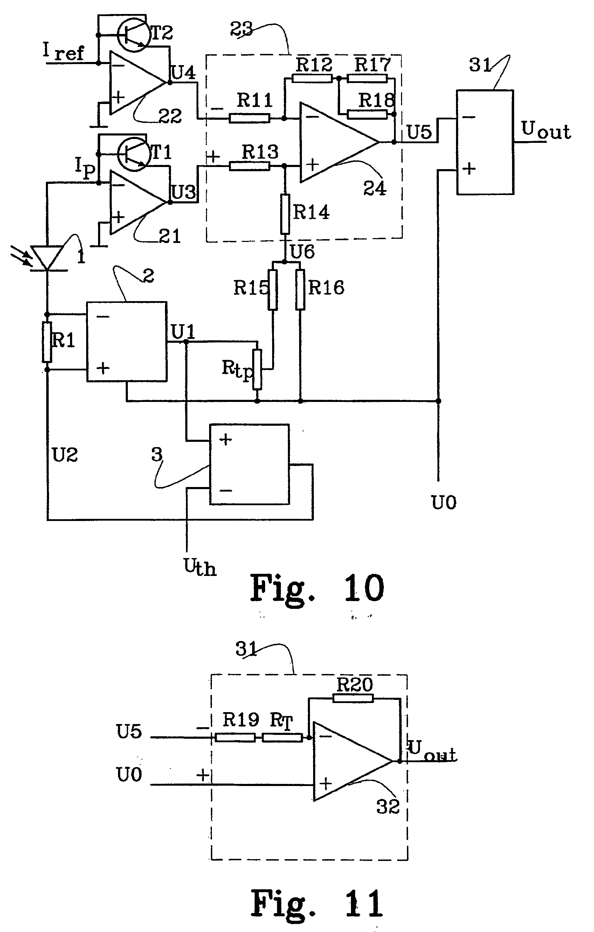

In Fig. 10 is shown a practical implementation of Fig. 9. To be able to trim the magnitude of the compensation voltage $U_c$ a trimming potentiometer $R_{tp}$ is connected with its ends between the first voltage U1 and the level adjust voltage U0. A fifteenth resistor R15 is connected between the sixth voltage U6 and the middle connection of the trimming potentiometer $R_{tp}$. A sixteenth resistor R16 is connected between the sixth voltage U6 and the level adjust voltage U0.

To achieve the best result the twelfth resistor R12 in the second differential amplifier 23 may then be complemented by a seventeenth resistor R17 and a eighteenth resistor R18 in order to compensate for resistive influence of the fifteenth resistor R15 and the sixteenth resistor R16.

The inverting amplifier 31 may be any inverting amplifier. However, even though the temperature dependence in the photo amplifier 4 partly is reduced by taking the difference between what is measured and a reference, there is still the second temperature dependency in the fifth voltage U5 that is proportional to the absolute temperature T in Kelvin. Thus, it would be good to include a circuit with a temperature dependency that is proportional to the inverse of the absolute temperature and the inverting amplifier 31 may be used for that purpose.

In Fig. 11 is shown an example of such an inverting amplifier. It includes a fifth operational amplifier 32 with a nineteenth resistor R19 on its negative input, with the level adjust voltage U0 on its positive input and a twentieth resistor R20 between its negative input and its output. The use of only those resistors and with the fifth voltage U5 connected to the nineteenth resistor R19 would give an output voltage $U_{out}$ of:

$$U_{out} = (U0-U5) \cdot R20/R19 + U0 \qquad (15)$$

Hence, if it were possible to find a nineteenth resistor R19 that varied as $R19 = R_0 \cdot T$, where $R_0$ is a constant, then our problems would be solved. However, that proves difficult to find in practise. This can be solved by adding a temperature dependent resistor $R_T$ in series, before or after, the nineteenth resistor R19. Said temperature dependent resistor $R_T$ is preferably a PRTD, i.e. a Resistance Temperature Detector made of platinum. This type of resistor is very well characterised and standardised since it is normally used as a temperature sensor. The nineteenth resistor R19 and the twentieth resistor R20 could then be normal resistors with no or at least low temperature dependency. Thus, the output voltage $U_{out}$ becomes:

$$U_{out} = (U0-U5) \cdot R20/(R19+R_T) + U0 \qquad (16)$$

If as an example a PRTD with 1000 $\Omega$ complying with the standard DIN EN 60751 according to IEC 751 is used, assuming nominal temperature dependence according to the standard, and the nineteenth resistor R19 is chosen as 55.77 $\Omega$, then the maximum deviation within 0-70°C will become approximately 0.2°C. In order to achieve this the temperature dependent resistor $R_T$ should have a temperature close to that of the transistors T1, T2. This is easiest implemented in practise if the temperature dependent resistor $R_T$ and the transistors T1, T2 are placed close to each other and if the circuit is so dimensioned that the power in the temperature dependent resistor $R_T$ is not so high that self-heating occurs.

Alternative and equivalent embodiments to those above arise if instead of the anode, the cathode of the photodiode is connected to the photo amplifier. Then all the signs in the rest of the circuits would have to change. E. g. would the second voltage U2 then become -5 V at high optical powers.

**Claims**

1. Photodiode bias circuit including a photodiode (1) producing a photocurrent ($I_p$), said photodiode (1) being biased with a bias voltage ($U_B$), **characterized in that** the photodiode bias circuit further includes means (2) for reading a measurand (U1, $I_p$) related to the photocurrent ($I_p$), means (3, 12) for comparing the measurand (U1, $I_p$) with a threshold ($U_{th}$) and means (3, 13) for giving the bias voltage ($U_B$) a magnitude depending on whether the measurand (U1, $I_p$) is larger than the threshold ($U_{th}$) or smaller.

2. Photodiode bias circuit according to claim 1, **characterized in that** the bias voltage ($U_B$) has a first magnitude close to 0 V if the measurand (U1, $I_p$) is smaller than the threshold and a second magnitude corresponding to a positive voltage, such as 5 V, if the measurand (U1, $I_p$) is larger than the threshold.

3. Photodiode bias circuit according to any of the claims 1-2, **characterized in that** the measurand is the photocurrent ($I_p$).

4. Photodiode bias circuit according to any of the claims 1-2, **characterized in that** the measurand is a first voltage (U1), which is a function of the photocurrent.

**5.** Photodiode bias circuit according to any of the claims 1-4, **characterized in that** the reading means includes a first differential amplifier (2).

**6.** Photodiode bias circuit according to any of the claims 1-5, **characterized in that** the comparing means and the giving means includes a comparator (3).

**7.** Photodiode bias circuit according to claim 6, **characterized in that** the comparator (3) includes an inner comparator (12) and a CMOS-circuit (13).

**8.** Photodiode bias circuit according to any of the claims 1-7, **characterized in that** the comparator (3) has a hysteresis around the threshold ($U_{th}$).

**9.** Photodiode bias circuit according to any of the claims 1-8, **characterized in that** the photodiode (1) may be seen as including an inner capacitor, that the photodiode bias circuit further includes a charge compensation capacitor (C1) connected in series with a second inverter (15) and in that the charge compensation capacitor (C1) and the second inverter (15) is connected in parallel with the photodiode (1).

**10.** Photodiode bias circuit according to claim 9, **characterized in that** the capacitance of the charge compensation capacitor (C1) is larger than the capacitance of the inner capacitor of the photodiode (1).

**11.** Photodiode bias circuit according to any of the claims 9-10, **characterized in that** an isolator (16) is provided between the charge compensation capacitor (C1) and the inverter (15).

**12.** Photodiode bias circuit according to claim 11, **characterized in that** the isolator (16) includes a second capacitor (C2) connected in series with the second inverter (15), and in that the isolator (16) further includes two diodes (D1, D2) connected in parallel with each other in opposing directions and connected in series with the second capacitor (C2).

**13.** Photo amplifier circuit including a photodiode bias circuit and a logarithmic amplifier (4) for reading an input current ($I_{in}$) or input voltage ($U_{in}$) and for giving out an output voltage ($U_{out}$), said logarithmic amplifier including a transistor (T1) or diode for generating logarithmic amplification, **characterized in that** the photodiode bias circuit is according to any of the claims 1-12.

**14.** Photo amplifier circuit according to claim 13, **characterized in that** said transistor (T1) or diode may be seen as including an inner serial resistance, and in that a compensation voltage ($U_c$) is arranged to be subtracted from the output voltage ($U_{out}$) for compensating for voltage drop over the inner serial resistance.

**15.** Photo amplifier circuit according to claim 14, **characterized in that** the compensation voltage ($U_c$) is a function of the photocurrent ($I_p$).

**16.** Photo amplifier circuit according to any of the claims 14-15, **characterized in that** a second differential amplifier (23) is provided with three inputs and an output, in that a third voltage (U3) proportional to the photo current ($I_p$) is connected to the first input of the second differential amplifier (23), in that a fourth voltage (U4) proportional to a reference voltage ($I_{ref}$) is connected to the second input of the second differential amplifier (23), in that a sixth voltage (U6) being a function of the compensation voltage ($U_c$) is connected to the third input of the second differential amplifier and in that a fifth voltage (U5) related to the output voltage ($U_{out}$) may be taken out from the output of the second differential amplifier (23).

**17.** Photo amplifier circuit according to any of the claims 13-16, **characterized in that** an inverting amplifier (31) including a positive input, a negative input and an output is connected to the output of the second differential amplifier (23).

**18.** Photo amplifier circuit according to claim 17, **characterized in that** the inverting amplifier (31) includes a temperature dependent resistor ($R_T$) on its negative input.

**19.** Photo amplifier circuit according to claim 18, **characterized in that** the temperature dependent resistor ($R_T$) is a resistance temperature detector made of platinum.

20. Photo amplifier circuit according to claim 19, **characterized in that** a resistor (R19) with a resistance of 55.77 $\Omega$ is provided in series with the temperature dependent resistor ($R_T$), and in that the temperature dependent resistor ($R_T$) has a resistance of 1000 $\Omega$.

21. Method for biasing a photodiode (1) with a bias voltage ($U_B$), said photodiode (1) producing a photocurrent ($I_p$), **characterized** by the following steps

    - reading a measurand (U1) related to the photocurrent ($I_p$),

    - comparing the measurand (U1) with a threshold ($U_{th}$) and

    - giving the bias voltage ($U_B$) a magnitude depending on whether the measurand (U1) is larger than the threshold ($U_{th}$) or smaller.

22. Method for biasing according to claim 21, **characterized** by giving the bias voltage ($U_B$) a first magnitude close to 0 V if the measurand (U1) is smaller than the threshold ($U_{th}$) and a second magnitude corresponding to a positive voltage, such as 5 V, if the measurand (U1) is larger than the threshold ($U_{th}$).

23. Method for biasing according to claim 21, **characterized** by making the change between the first and the second magnitude fast.

24. Method for biasing according to claim 21, **characterized** by making the change between the first and the second magnitude slow.

25. Method for biasing according to any of the claims 21-24, **characterized** by using one threshold when the photocurrent ($I_p$) is increasing and by using another threshold when the photocurrent ($I_p$) is decreasing, so as to create a hysteresis.

26. Method for biasing according to any of the claims 21-25, **characterized** by the following steps when the bias voltage is changed:

    - generating a photo transient current in the photodiode

        (1) and

    - generating a charge compensation transient current in the opposite direction compared to the photo transient current.

27. Method for biasing according to claim 26, **characterized** by making the charge compensation transient current somewhat larger in magnitude than the photo transient current.

28. Method for amplifying a photocurrent in a logarithmic amplifier reading and amplifying the photocurrent and giving out an output voltage ($U_{out}$) as a function of the photocurrent, **characterized** by biasing the photodiode (1) according to any of the claims 21-27.

29. Method for amplifying according to claim 28, wherein the logarithmic amplifier includes an transistor (T1) or diode which may be seen as having an inner serial resistance, **characterized** by compensating for voltage drop over the inner serial resistance by subtracting a compensation voltage ($U_c$) from the output voltage ($U_{out}$).

30. Method for amplifying according to claim 29, **characterized** by using the measurand (U1) to generate the compensation voltage ($U_c$).

**Fig. 1**

**Fig. 2**

**Fig. 3**

**Fig. 4**

Fig. 5

Fig. 6

I ref

T2

U4

22

I P

T1

U3

21

1

R1

U2

23

R11

R12

R13

24

R14

U6

U5 (U_out)

# Fig. 7

I ref

T2

U4

22

I P

T1

U3

21

1

23

U5 (U_out)

R1

2

U1

U_c

k4

U2

3

U_th

U6

U0

# Fig. 8

Fig. 9

Fig. 10

Fig. 11

**European Patent Office**

## EUROPEAN SEARCH REPORT

Application Number

EP 00 85 0035

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 9, no. 136, 6 December 1985 (1985-12-06) & JP 60 020655 A (IWATSU ELECTRIC), 1 February 1985 (1985-02-01) * abstract * | 1-6,21, 22 | G01J1/44 |
| A | PATENT ABSTRACTS OF JAPAN vol. 95, no. 08, 29 September 1995 (1995-09-29) & JP 07 122980 A (CANON), 12 May 1995 (1995-05-12) * abstract * | 1,7 | |
| A | PATENT ABSTRACTS OF JAPAN vol. 96, no. 2, 29 February 1996 (1996-02-29) & JP 07 286900 A (JAPAN ENERGY), 31 October 1995 (1995-10-31) * abstract * | 1,7 | |
| A | US 5 013 904 A (MURO HIDEO) 7 May 1991 (1991-05-07) * abstract; claim 1 * | 8 | TECHNICAL FIELDS SEARCHED (Int.Cl.7) G01J |

The present search report has been drawn up for all claims

| Place of search | Date of completion of the search | Examiner |
|---|---|---|
| THE HAGUE | 24 July 2000 | De Buyzer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 85 0035

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2000

| Patent document cited in search report | | | Publication date | Patent family member(s) | | Publication date |
|---|---|---|---|---|---|---|
| JP 60020655 | A | | 01-02-1985 | JP | 1634331 C | 20-01-1992 |
| | | | | JP | 2057740 B | 05-12-1990 |
| JP 07122980 | A | | 12-05-1995 | NONE | | |
| JP 07286900 | A | | 31-10-1995 | JP | 2676596 B | 17-11-1997 |
| US 5013904 | A | | 07-05-1991 | NONE | | |

EPO FORM P0459

For more details about this annex : see Official Journal of the European Patent Office, No. 12/82